# EUROPEAN PATENT SPECIFICATION

(11) **EP 3 044 448 B1**
(45) Date of publication and mention of the grant of the patent: **16.12.2020**
(21) Application number: 14753451.5
(22) Date of filing: 13.08.2014
(51) Int. Cl.: F02F 7/00, F02B 63/06

(54) **ADAPTOR FOR MOUNTING A PUMP TO AN ENGINE**
ADAPTER ZUM ANSCHLUSS EINER PUMPE AN EINEN MOTOR
ADAPTATEUR POUR ACCOUPLER UNE POMPE À UN MOTEUR

(30) Priority: 11.09.2013 GB 201316184
(43) Date of publication of application: 20.07.2016
(73) Proprietor: Caterpillar Inc., Peoria, IL 61626-9510 (US)
(72) Inventor: DI SCHINO, Marc, F-38760 Varces Allieres et Risset (FR); DVORAK, Paul A., Hanna City, Illinois 61536 (US); ROLLAND, Eric, 38100 Grenoble (FR); THUBERT, Florent, 38320 Eybens (FR)
(74) Representative: BRP Renaud & Partner mbB Rechtsanwälte Patentanwälte Steuerberater
(86) International application number: PCT/US2014/050898
(87) International publication number: WO 2015/038269

(56) References cited:
- EP-A2- 0 992 672
- EP-A2- 1 700 668
- US-A- 4 998 515

## Description

### Technical Field

The present disclosure relates to an engine-pump support unit and more specifically to the engine-pump support unit disposed between an engine flywheel casing and a pump.

### Background

Many machines may utilize pumps which are driven by an engine provided on the machine. Some of the machines may require the pumps to be supported on the engine and thus require a mounting device. A mounting device may be disposed between the pump and an engine flywheel casing in order to attach the pump to the engine. Known designs of this mounting arrangement include a three piece structure having a plate, a beam and a yoke. More specifically, the plate is attached to the engine flywheel casing, the beam extends below the pump and the yoke is upstanding from one end of the beam in order to provide support to the pump. The known solutions may occupy a lot of space, may be cumbersome and may be expensive. Moreover, in some situations, reduced space may be available for the mounting arrangement, based on the application.

For example, US 4,998,515 A discloses a cover for use on the forward end of an internal combustion engines. The cover is formed of an integral cast metal dish-like shape. A fuel pump opening is integrally formed on one side of the cover. Additionally, on one side, near a lower portion of the cover, an oil pump housing is integrally formed.

Furthermore, EP 1 700 668 A2 discloses a diesel engine attached via a centering assembly to a hydraulic pump or flywheel housing by machine bolts. The centering assembly consists essentially of two plates. The first plate centers the unit relative to the flywheel housing. The second plate links the unit directly to the flywheel housing.

Hence, there is a need for an improved design of the mounting arrangement.

### Summary of the Disclosure

In one aspect of the present disclosure, an adaptor for mounting a pump to an engine according to claim 1 is provided.

Other features and aspects of this disclosure will be apparent from the following description and the accompanying drawings.

### Brief Description of the Drawings

Figure 1 is a perspective view of an exemplary pump and engine assembly;
Figures 2 and 3 are perspective views of a pump side of an adaptor, according to the disclosure; and
Figure 4 is a perspective view of an engine side of the adaptor shown in Figures 2 and 3.

### Detailed Description

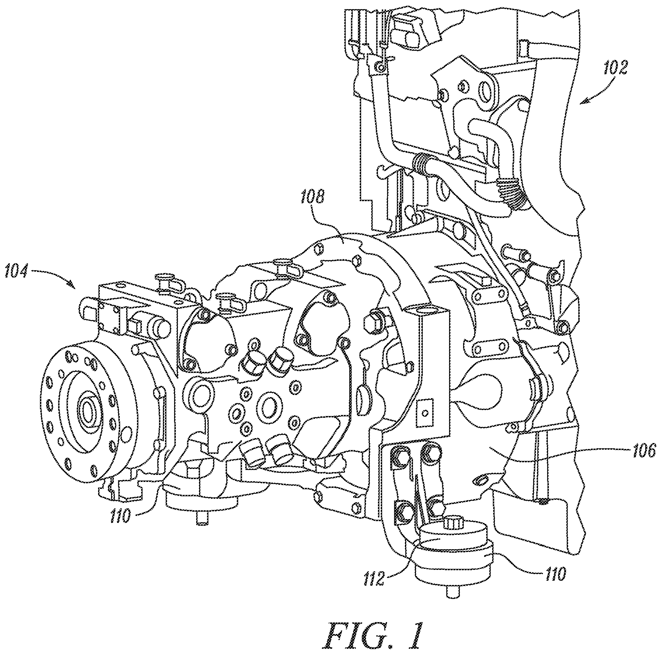

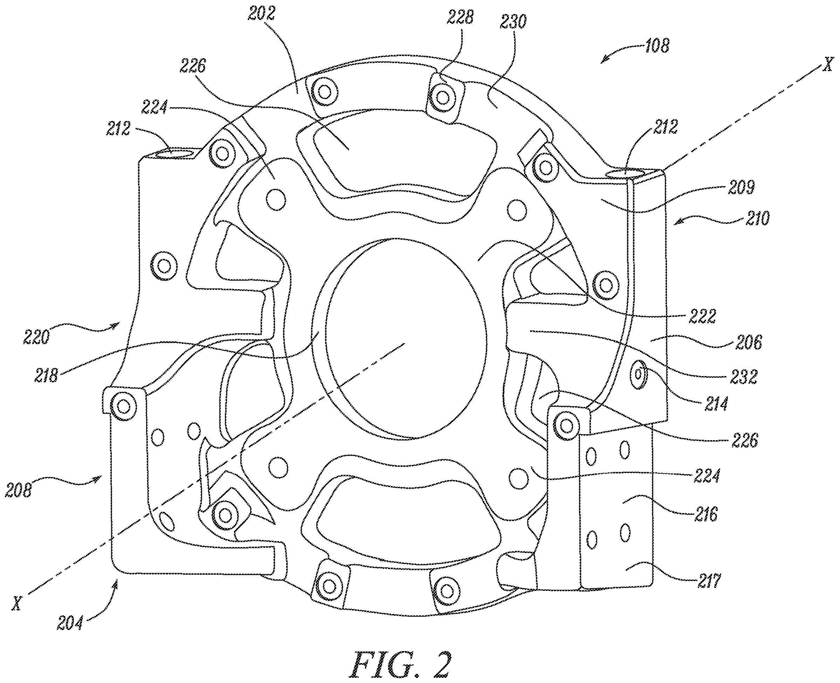

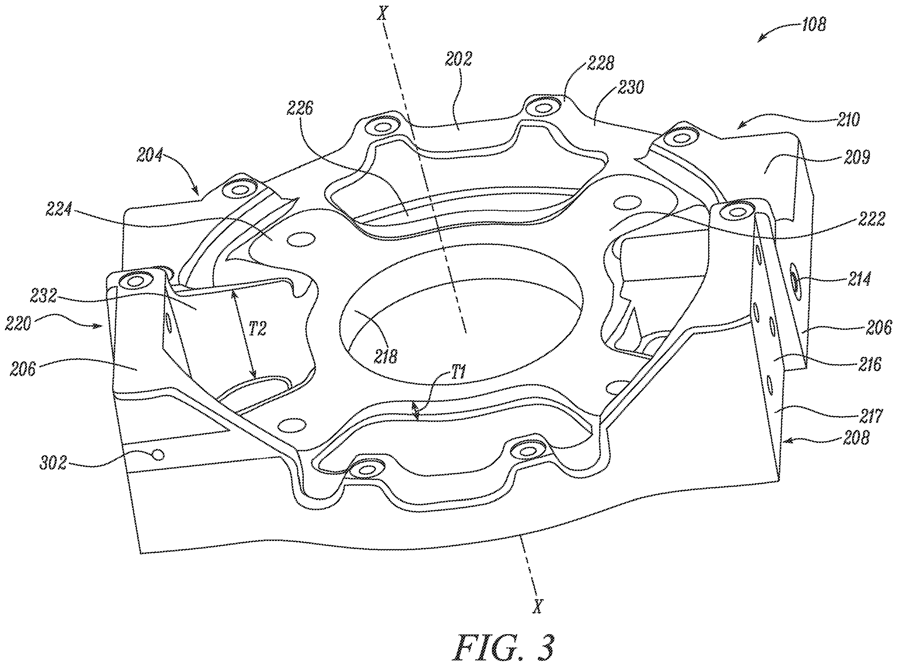

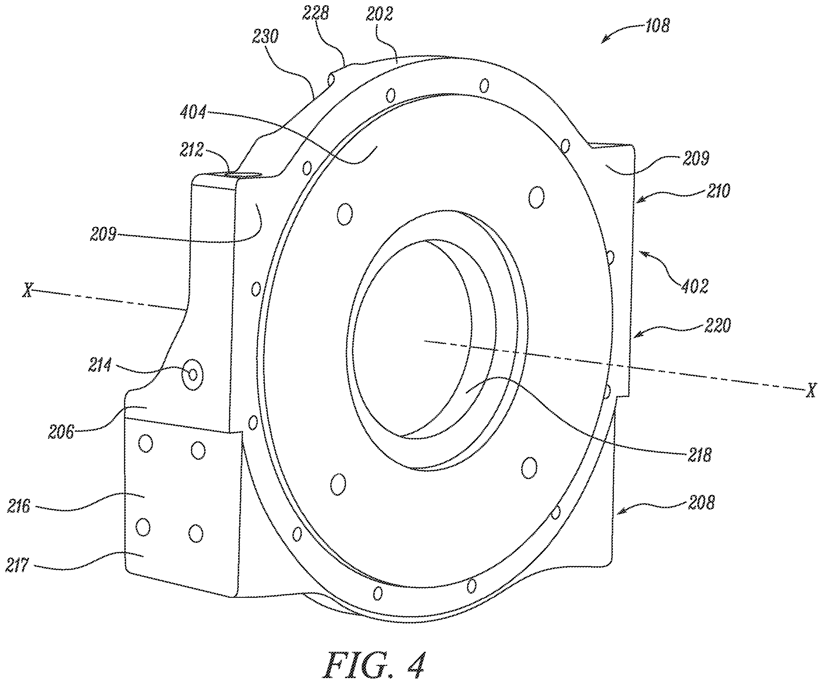

Wherever possible, the same reference numbers will be used throughout the drawings to refer to the same or the like parts. Figure 1 illustrates an exemplary arrangement including an engine 102 and a pump 104. The present disclosure relates to an adaptor 108 for mounting the pump 104 to an engine flywheel casing 106 of the engine 102. Various views of the adaptor 108 are shown in Figures 2, 3 and 4. The adaptor 108 includes a main body 202 having a pump side 204 (shown in Figures 2 and 3) and an engine side 402 (shown in Figure 4). The main body 202 of the adaptor 108 may have a plate like structure possibly with a substantially circular shape. The adaptor 108 may be made of any suitable metal known in the art.

Referring to Figures 2 and 3, the adaptor 108 also includes a wall 206 extending from at least a part of an outer periphery of the main body 202. The wall 206 extends in a direction parallel to that of an axis X-X of the adaptor 108. The wall 206 is present on the pump side 204 of the adaptor 108, and projects in the direction away from the engine flywheel casing 106. In one embodiment, the wall 206 may be positioned in a lower section 208 of the main body 202. The wall 206 is configured to provide mechanical support to the adaptor 108. In one embodiment, a portion of the wall 209 may extend in a coplanar manner from the outer periphery of the adaptor 108. This portion of the wall 209 may be positioned in an upper section 210 of the main body 202. This portion of the wall 209 may provide further mechanical strength and support to the overall structure of the adaptor 108. This portion of the wall 209 may also include lifting points 212 for assembly and removal of the adaptor 108. As shown in Figure 3, a hole 302 may be provided on a bottom surface of the adaptor 108 in order to hold a coolant line via a clip.

A foot mounting portion 216 is defined on an outer face 217 of the wall 206. A foot 110 (see Figure 1) may be attached to the foot mounting portion 216 using known mechanical fasteners like bolts, rivets, screws and so on. In the accompanying figures, a pair of the foot mounting portions 216 is defined on either side of a lower section 208 of the adaptor 108. The foot mounting portions 216 may be generally planar and lie in a plane normal to a plane of the main body 202 of the adaptor 108. Also, the foot mounting portions 216 may have a pad like configuration and may extend axially in the direction away from the engine flywheel casing 106, in order to prevent interference with the engine flywheel casing 106. An absorbing element 112 (see Figure 1) may be attached to a base of the foot 110. The foot 110 may allow for the adaptor 108 to be attached to a frame (not shown) or support member (not shown) of a machine for support. The absorbing elements 112 of the foot 110 may prevent transfer of vibrations to and fro between the engine 102 and the frame.

Referring to Figures 2 to 4, the main body 202 has a through hole 218 provided in an inner portion 220 of the adaptor 108. The hole 218 allows for passage of a shaft of the pump 104 through the adaptor 108 and into the flywheel within the engine flywheel casing 106.

Further, as shown in Figures 2 and 3, a raised portion 222 exists surrounding the hole 218 on the pump side 204 of the adaptor 108. The raised portion 222 may have a thickness T1 (see Figure 3). In one embodiment, webs 224 may extend radially outwards from the hole 218 towards the outer periphery of the main body 202. In the illustrated embodiment four webs 224 are shown, such that each of the pairs of webs 224 is located at substantially opposed positions to one another. The pump 104 may be mounted to these webs 224 present on the pump side 204 of the adaptor 108.

Additionally, the raised portion 222 and the outer periphery of the main body 202 may define pockets 226 or depressions 226 on various parts of a surface of the pump side 204 of the adaptor 108. These pockets 226 may be positioned in locations experiencing relatively lesser mechanical stress. Voids created by the pockets 226 may result in an overall lesser volume of the material needed to form the adaptor 108. This may allow for a reduction in cost associated with the material utilized in forming the adaptor 108.

The outer periphery of the main body 202 also includes raised protrusions 228 configured to receive mechanical fasteners such as bolts and screws for attaching the adaptor 108 to the engine flywheel casing 106. In one embodiment, a pattern of alternate raised protrusions 228 and depressions 230 are formed on the outer periphery of the main body 202, allowing for reduction in the volume of the material used to form the adaptor 108, and thereby providing a cost effective solution.

As illustrated in Figures 2 and 3, a rib 232 is provided extending from the wall 206 towards a centre of the adaptor 108. In one embodiment, a pair of the ribs 232 is provided in the inner portion 220 of the main body 202 of the adaptor 108. As is clearly visible in Figure 3, these ribs 232 have a thickness 'T2' greater than the thickness 'T1' of the raised portion 222. These ribs 232 provide improved mechanical support and stiffness to the main body 202, in order to hold the pump 104 securely in place with respect to the pump side 204 of the main body 202 of the adaptor 108.

Figure 4 illustrates the engine side 402 of the main body 202 of the adaptor 108. The engine side 402 is configured to attach the adaptor 108 to the engine flywheel casing 106. As seen, the engine side 402 includes a substantially raised mounting face 404 having a step like configuration to align the adaptor 108 with engine flywheel casing 106. The diameter of the raised mounting face 404 of the main body 202 of the adaptor 108 may coincide or be equal to that of the engine flywheel casing 106 in order to provide a good fit.

The adaptor 108 disclosed herein provides improved mechanical support due to the stiff structure of the design. Further, the design of the adaptor 108 allows for installation and also is less costly due to savings in the material used to form the adaptor 108.

### Industrial Applicability

The installation of the adaptor 108 will now be described in detail. The adaptor 108 is configured to be lifted and positioned in place with the help of lift arms attached to the lifting points 212 on the adaptor 108. The adaptor 108 may then be bolted to the surface of the engine flywheel casing 106. Further, the pump 104 is configured to be bolted to the pump side 204 of the adaptor 108. The mounting foot 110 or leg or associated known absorbing elements 112 may be attached to the foot mounting portion 216 defined on the outer face 217 of the wall 206 of the adaptor 108. The base of the foot 110 may then be affixed to the frame of the machine.

While aspects of the present disclosure have been particularly shown and described with reference to the embodiments above, it will be understood by those skilled in the art that various additional embodiments may be contemplated by the modification of the disclosed machines, systems and methods without departing from the scope of the appended claims.

## Claims

1. An adaptor (108) for mounting a pump (104) to an engine (102), the adaptor (108) comprising:
a main body (202) formed in one piece and comprising:
a pump side (204) for mounting the pump (104) to the adaptor (108);
an engine side (402) for mounting the adaptor (108) to the engine (102);
a through hole (218) configured to receive a shaft for interconnecting the pump (104) and the engine (102);
an outer periphery;
a rib (232) provided on the pump side (204) and extending inwards from the outer periphery of the main body (202) towards a center of the adaptor (108);
a wall (206) projecting from the pump side (204) and extending around at least a part of the outer periphery of the main body (202); and
at least one foot mounting portion (216) configured to receive a mounting foot (110), wherein the foot mounting portion (216) is defined on an outer face (217) of the wall (206).

2. The adaptor (108) of claim 1, wherein the wall (206) is positioned in a lower section (208) of the main body (202) of the adaptor (108).

3. The adaptor (108) of claim 1 or 2, wherein a pair of ribs (232) is provided at generally opposed locations on the pump side (204) of the main body (202) of the adaptor (108).

4. The adaptor (108) of claim 1, wherein the through hole (218) is provided in an inner portion (220) of the main body (202) and a plurality of webs (224) extend outwards from the inner portion (220) towards the outer periphery of the main body (202), the plurality of webs (224) being configured for attachment to the pump (104).

5. The adaptor (108) of claim 1, wherein pockets (226) are defined in the pump side (204) of the main body (202) and at locations of reduced mechanical stress.

6. The adaptor (108) of claim 1, wherein the foot mounting portion (216) is generally planar and lies in a plane normal to a plane of the main body (202).

7. The adaptor (108) of claim 1, wherein the engine side (402) of the main body (202) has a generally raised mounting face (404) configured for interconnecting the adaptor (108) and the engine (102).

8. The adaptor (108) of claim 7, wherein the raised mounting face (404) has a substantially circular configuration having a diameter substantially equal to that of the engine (102) to which the adaptor (108) is configured to connect.

9. The adaptor (108) of any one of the preceding claims, further comprising:
a mounting foot (110) attached to the foot mounting portion (216); and
an absorbing element (112) attached to a base of the mounting foot (110)

## Patentansprüche

1. Adapter (108) zum Anschluss einer Pumpe (104) an einen Motor (102), wobei der Adapter (108) umfasst:
einen Hauptkörper (202), der einstückig ausgebildet ist und umfasst:
eine Pumpenseite (204) zum Anschluss der Pumpe (104) an den Adapter (108);
eine Motorseite (402) zum Anschluss des Adapters (108) an den Motor (102);
ein Durchgangsloch (218), das konfiguriert ist, um eine Welle zum Verbinden der Pumpe (104) und des Motors (102) aufzunehmen;
einen Außenumfang;
eine Rippe (232), die auf der Pumpenseite (204) bereitgestellt ist und sich vom Außenumfang des Hauptkörpers (202) nach innen in Richtung einer Mitte des Adapters (108) erstreckt;
eine Wand (206), die von der Pumpenseite (204) vorsteht und sich um mindestens einen Teil des Außenumfangs des Hauptkörpers (202) erstreckt; und
mindestens einen Fußanschlussabschnitt (216), der konfiguriert ist, um einen Anschlussfuß (110) aufzunehmen, wobei der Fußanschlussabschnitt (216) an einer Außenfläche (217) der Wand (206) definiert ist.

2. Adapter (108) nach Anspruch 1, wobei die Wand (206) in einem unteren Abschnitt (208) des Hauptkörpers (202) des Adapters (108) positioniert ist.

3. Adapter (108) nach Anspruch 1 oder 2, wobei ein Paar Rippen (232) an allgemein gegenüberliegenden Stellen auf der Pumpenseite (204) des Hauptkörpers (202) des Adapters (108) bereitgestellt ist.

4. Adapter (108) nach Anspruch 1, wobei das Durchgangsloch (218) in einem inneren Abschnitt (220) des Hauptkörpers (202) bereitgestellt ist und sich eine Vielzahl von Stegen (224) vom inneren Abschnitt (220) nach außen zum Außenumfang des Hauptkörpers (202) erstreckt, wobei die Vielzahl von Stegen (224) zur Anbringung an der Pumpe (104) konfiguriert ist.

5. Adapter (108) nach Anspruch 1, wobei Taschen (226) in der Pumpenseite (204) des Hauptkörpers (202) und an Stellen verringerter mechanischer Spannung definiert sind.

6. Adapter (108) nach Anspruch 1, wobei der Fußanschlussabschnitt (216) allgemein eben ist und in einer Ebene senkrecht zu einer Ebene des Hauptkörpers (202) liegt.

7. Adapter (108) nach Anspruch 1, wobei die Motorseite (402) des Hauptkörpers (202) eine allgemein erhöhte Anschlussfläche (404) aufweist, die zum Verbinden des Adapters (108) und des Motors (102) konfiguriert ist.

8. Adapter (108) nach Anspruch 7, wobei die erhöhte Anschlussfläche (404) eine im Wesentlichen kreisförmige Konfiguration mit einem Durchmesser aufweist, der im Wesentlichen gleich dem des Motors (102) ist, zur Verbindung mit dem der Adapter (108) konfiguriert ist.

9. Adapter (108) nach einem der vorstehenden Ansprüche, ferner umfassend:
einen Anschlussfuß (110), der an dem Fußanschlussabschnitt (216) angebracht ist; und
ein absorbierendes Element (112), das an einer Basis des Anschlussfußes (110) angebracht ist

## Revendications

1. Adaptateur (108) pour accoupler une pompe (104) à un moteur (102), l'adaptateur (108) comprenant :
un corps principal (202) formé d'une seule pièce et comprenant :
un côté pompe (204) pour accoupler la pompe (104) à l'adaptateur (108) ;
un côté moteur (402) pour accoupler l'adaptateur (108) au moteur (102) ;
un trou débouchant (218) configuré pour recevoir un arbre pour interconnecter la pompe (104) et le moteur (102) ;
une périphérie externe ;
une nervure (232) fournie sur le côté pompe (204) et s'étendant vers l'intérieur depuis la périphérie externe du corps principal (202) vers un centre de l'adaptateur (108) ;
une paroi (206) faisant saillie depuis le côté pompe (204) et s'étendant autour d'au moins une partie de la périphérie externe du corps principal (202) ; et
au moins une partie d'accouplement de pied (216) configurée pour recevoir un pied d'accouplement (110), dans laquelle la partie d'accouplement de pied (216) est définie sur une face externe (217) de la paroi (206).

2. Adaptateur (108) selon la revendication 1, dans lequel la paroi (206) est positionnée dans une section inférieure (208) du corps principal (202) de l'adaptateur (108).

3. Adaptateur (108) selon la revendication 1 ou 2, dans lequel une paire de nervures (232) est fournie à des emplacements généralement opposés sur le côté pompe (204) du corps principal (202) de l'adaptateur (108).

4. Adaptateur (108) selon la revendication 1, dans lequel le trou débouchant (218) est fourni dans une partie interne (220) du corps principal (202) et une pluralité de bandes (224) s'étendent vers l'extérieur depuis la partie interne (220) vers la périphérie externe du corps principal (202), la pluralité de bandes (224) étant configurées pour être fixées à la pompe (104).

5. Adaptateur (108) selon la revendication 1, dans lequel des poches (226) sont définies dans le côté pompe (204) du corps principal (202) et à des emplacements de contrainte mécanique réduite.

6. Adaptateur (108) selon la revendication 1, dans lequel la partie d'accouplement de pied (216) est généralement plane et se situe dans un plan perpendiculaire à un plan du corps principal (202).

7. Adaptateur (108) selon la revendication 1, dans lequel le côté moteur (402) du corps principal (202) a une face d'accouplement généralement surélevée (404) configurée pour interconnecter l'adaptateur (108) et le moteur (102).

8. Adaptateur (108) selon la revendication 7, dans lequel la face d'accouplement surélevée (404) a une configuration sensiblement circulaire ayant un diamètre sensiblement égal à celui du moteur (102) auquel l'adaptateur (108) est configuré pour se raccorder.

9. Adaptateur (108) selon l'une quelconque des revendications précédentes, comprenant en outre :
un pied d'accouplement (110) fixé à la partie d'accouplement de pied (216) ; et
un élément absorbant (112) fixé à une base du pied d'accouplement (110)
